Europäisches Patentamt

European Patent Office

Office européen des brevets

(11) Veröffentlichungsnummer: **0 250 638**
**B1**

(12) # EUROPÄISCHE PATENTSCHRIFT

(45) Veröffentlichungstag der Patentschrift:
**20.12.89**

(51) Int. Cl.⁴: **B 25 B 27/30**

(21) Anmeldenummer: **86109932.3**

(22) Anmeldetag: **19.07.86**

(54) Druckfedernspanner.

(30) Priorität: **04.07.86 DE 8617893 U**

(43) Veröffentlichungstag der Anmeldung:
**07.01.88 Patentblatt 88/1**

(45) Bekanntmachung des Hinweises auf die Patenterteilung:
**20.12.89 Patentblatt 89/51**

(84) Benannte Vertragsstaaten:
**AT BE CH DE FR GB IT LI NL SE**

(56) Entgegenhaltungen:
**DE-A- 2 652 820**
**DE-C- 2 813 381**
**DE-U- 8 230 608**
**US-A- 4 516 303**

(73) Patentinhaber: **Klann, Horst, Terra-Wohnpark 12,
D-7730 Villingen-Schwenningen 24 (DE)**

(72) Erfinder: **Klann, Horst, Terra-Wohnpark 12,
D-7730 Villingen-Schwenningen 24 (DE)**

(74) Vertreter: **Neymeyer, Franz, Dipl.-Ing. (FH), Haselweg 20,
D-7730 Villingen 24 (DE)**

ACTORUM AG

## Beschreibung

Die Erfindung betrifft einen Druckfedernspanner, insbesondere für Achsfedern von Kraftfahrzeugen, bestehend aus zwei durch wenigstens ein zylindrisches Führungselement miteinander verbundenen, koaxial zueinander angeordneten Klammernhaltern, an denen in zueinander deckungsgleicher Anordnung im wesentlichen hufeisenförmige Greiferklammern befestigt sind, wobei der erste Klammernhalter am einen Ende des Führungselementes befestigt und der zweite Klammernhalter mittels einer beidseitigen offenen Führungsbohrung mit Schiebepaßsitz axial beweglich auf dem Führungselement geführt ist und eine axial unbeweglich gelagerte Gewindemutter aufweist, die mit einer in achsparalleler Lage zum Führungselement in der gemeinsamen Mittelebene der beiden Greiferklammern angeordneten Gewindespindel in Eingriff steht, durch welche der zweite Klammernhalter auf dem Führungselement relativ zum ersten Klammernhalter axial antreibbar ist.

Bei einem bekannten Druckfedernspanner dieser Art (DE-PS 2 813 381) ist die Gewindespindel koaxial innerhalb des nur einmal vorhandenen Führungsrohres angeordnet. Der bewegliche Klammernhalter besteht aus einem das Führungsrohr mit Schiebepaßsitz umschließenden Hülsenteil, der durch mindestens einen Radialfinger, welcher in einem Axialschlitz des Führungsrohres formschlüssig geführt ist, mit einem zylindrischen Gleitstein starr verbunden ist. Der Gleitstein ist axial verschiebbar an der Innenfläche des Führungsrohres geführt und steht durch ein Innengewinde mit der Gewindespindel in Eingriff, welche ihrerseits drehbar an den beiden Enden des Führungsrohres in diesem gelagert und wenigstens an einem ihrer beiden Enden mit einem Schlüsselprofil versehen ist. Für die sinnvolle Anwendung dieses bekannten Druckfedernspanners ist es unerlässlich, daß die Stirnseite des Führungsrohres, aus welcher das Schlüsselprofil der Gewindespindel herausragt, frei zugänglich ist und die zu spannenden Druckfedern aus Festigkeitsgründen im gespannten Zustand eine Federkraft aufbringen, welcher das Führungsrohr standhält. Weil bei diesem bekannten Federspanner das Führungsrohr mit einem Axialschlitz versehen ist, durch welchen die Verbindung zwischen dem inneren, mit einem Muttergewinde versehenen Gleitstein und dem äußeren Hülsenteil hergestellt wird, und weil eben nur ein einziges Führungsrohr vorhanden ist, läßt sich unter Berücksichtigung einer einfachen Handhabung sowie möglichst leichten und raumsparenden Bauweise bedingt durch das Konstruktionsprinzip ein derartiger Druckfedernspanner nicht für extrem starke Achsfedern von Kraftfahrzeugen auslegen.

Es ist zwar auch schon ein Druckfedernspanner bekannt (DE-OS 2 652 820, bei dem die Klammernhalter jeweils an zwei in Parallellage nebeneinander angeordneten Rohrkörpern befestigt sind. Dabei ist der eine Klammernhalter an zwei Rohrkörpern befestigt, welche als pneumatisch beaufschlagbare Druckzylinder mit darin angeordneten Druckkolben ausgebildet sind. Der andere Klammernhalter ist an zwei zylindrischen Rohren befestigt, die teleskopartig über die als Druckzylinder ausgebildeten Rohrkörper geschoben sind und relativ zu diesen in axialer Richtung bewegt werden, wenn eine Beaufschlagung der beiden Druckkolben bzw. wenn eine Druckverminderung im Druckzylinder stattfindet. Zum manuellen Halten des gesamten Druckfedernspanners ist an den beiden die Druckzylinder aufnehmenden und miteinander verbundenen Rohren ein gemeinsamer Handgriff angeordnet, in dem die Druckluftventile für die Zufuhr und für die Abfuhr der Druckluft in bzw. aus den Druckzylindern untergebracht sind.

Da bei diesem bekannten Druckfedernspanner das maximale, sich aus dem Produkt Druckkraft und Weg zusammensetzende Arbeitsvermögen nicht nur von der Größe des zur Verfügung stehenden Luftdruckes, sondern auch vom Querschnitt der Kolbenfläche abhängt, bedarf es bei einem nur begrenzt zur Verfügung stehenden Luftdruck einer Vergrößerung eines Querschnittes der wirksamen Kolbenfläche, wenn man den Druckfedernspanner zum Zusammenpressen stärkerer Federn auslegen will. Deswegen ist dieses Funktionsprinzip für die Erzielung einer raumsparenden Bauweise ungeeignet. Hinzu kommt, daß wegen der teleskopartig ineinander schiebbaren Rohre der maximale Arbeitshub bei diesem bekannten Druckfedernspanner kleiner ist als die Hälfte seiner Gesamtlänge im entspannten Zustand. Dies ist ein Nachteil, der bei einem Druckfedernspanner, dessen beweglicher Klammernhalter durch eine Gewindespindel verschoben wird, nicht auftritt.

Der Erfindung liegt die Aufgabe zugrunde, einen Druckfedernspanner der eingangs genannten Art für extrem starke Druckfedern zu schaffen, der in bezug auf seine maximale axiale Länge einen möglichst großen Arbeitshub auszuführen im Stande ist und der bei erhöhter Festigkeit eine möglichst raumsparende und leichte Bauweise aufweist.

Gelöst wird diese Aufgabe erfindungsgemäß dadurch, daß zur Führung des zweiten Klammernhalters wenigstens zwei Führungsrohre oder -stäbe parallel zueinander verlaufend beidseitig der Gewindespindel, symmetrisch zu der gemeinsamen Mittelebene, in der die Gewindespindel angeordnet ist, im ersten Klammernhalter oder in einer ersten Lagerbrücke befestigt und an ihren gegenüberliegenden Enden durch eine zweite Lagerbrücke miteinander verbunden sind, wobei die Führungsrohre oder -stäbe jeweils eine Führungsbohrung des zweiten Klammernhalters führend durchragen.

Durch das Vorsehen wenigstens zweier Führungsrohre oder -stäbe, die einen relativ geringen Durchmesser aufweisen und somit wesentlich zu Erreichung einer raumsparenden Bauweise beitragen können, ist es möglich die Festigkeit gegenüber einem Druckfedernspanner mit nur einem Führungsrohr mehr als zu verdoppeln und durch deren Anordnung in bezug auf die Gewindespindel wird die Kraftzufuhr zum zweiten auf den Führungsrohren beweglichen Klammernhalter in einer Weise durchgeführt, die während des Spannvorganges an einer Druckfeder eine Kippmomentbelastung der Führungsrohre oder -stäbe durch diesen zweiten Klammernhalter zumindest weitgehend ausschließt, die aber das Wirksamwerden eines solchen Kippmomentes bei stillstehendem zweitem Klammernhalter und bei geringfügig in Entspannungsrichtung gedrehter Gewindespindel ermöglicht, derart, daß der an sich auf den Führungsrohren- oder stäben bewegliche Klammernhalter durch den auf ihn einwirkenden Federdruck der gespannten Druckfeder auf den Führungsrohren oder -stäben einen stabilen Klemmsitz erhält. Dadurch wird die Funktionssicherheit wesentlich erhöht.

Durch die Ausgestaltung des erfindungsgemäßen Druckfedernspanners nach Anspruch 2 wird die Möglichkeit geschaffen, die beiden beidseitig symmetrisch der Mittelebene der Greiferklammern, in welcher auch die Gewindespindel angeordnet ist, angeordneten Führungsrohre oder -stäbe näher zusammenzurücken und dadurch eine in der Breite raumsparendere Bauweise zu erzielen. Unter Berücksichtigung des vorstehend beschriebenen Vorteiles der Entstehung eines Klemmsitzes sollte jedoch der Versatz der Gewindespindel in bezug auf die Achsebene der beiden benachbarten Führungsrohre oder -stäbe nicht größer sein als der halbe Spindeldurchmesser.

Während es grundsätzlich möglich ist, beim erfindungsgemäßen Druckfedernspanner die Bewegung des zweiten auf den Führungsrohren beweglichen Klammernhalters durch Drehbewegungen der Gewindespindel zu erzielen und demgemäß die Gewindespindel drehbar zu lagern und mit einem Schlüsselprofil zu versehen, wird durch die Ausgestaltung des erfindungsgemäßen Druckfedernspanners nach Anspruch 3 der Vorteil erzielt, daß infolge der festsitzenden Anordnung der Gewindespindel besondere Wälz- und Drucklager für die Gewindespindel entfallen können, was nicht nur zu einer Verbilligung, sondern auch zu einer raumsparenderen Bauweise führt. Außerdem ist durch diese Ausgestaltung der Vorteil gegeben, daß das zur Drehung des mit der Gewindemutter in Eingriff stehenden Zahnrades erforderliche Werkzeug in einer räumlich günstigeren Lage angesetzt werden kann, wenn die Achsfeder eines Kraftfahrzeuges im eingebauten Zustand gespannt oder entspannt werden soll und die dabei gegebenen räumlichen Verhältnisse einen stirnseitigen Zugang zur Gewindespindel nicht zulassen.

Die Ausgestaltung des Druckfedernspanners nach Anspruch 4 trägt nicht nur dazu bei, das am Schaft des Zahnrades aufzubringende Drehmoment zum Spannen extrem starker Druckfedern auf ein annehmbares Maß zu reduzieren und den Grad der Selbsthemmung und somit der Sicherheit zu erhöhen, sondern es ergeben sich dadurch auch räumliche Vorteile, indem das mit dem Zahnkranz der Gewindemutter in Eingriff stehende Zahnrad bzw. die Schnecke einen wesentlich kleineren Durchmesser aufweisen kann als der Zahnkranz bzw. Schneckenrad der Gewindemutter.

Während durch die Ausgestaltung des Druckfedernspanners gemäß Anspruch 5 eine weitere Verringerung des Raumbedarfs und Verbesserung der Zugänglichkeit des Antriebschaftes erreicht wird, ergibt die Ausgestaltung nach Anspruch 6 durch das Vorsehen eines dritten Führungselementes in Form eines Rohres oder Stabes eine weitere Erhöhung der Belastbarkeit bzw. Festigkeit des Druckfedernspanners und somit die Möglichkeit noch stärkere Druckfedern zu spannen, wobei durch die vorgesehene Anordnung des dritten Führungselementes eine besonders raumsparende Bauweise bezüglich des Gesamtquerschnittes erreicht wird. Die Ausgestaltung des Druckfedernspanners gemäß Anspruch 7 hat den Vorteil, daß die für die Unterbringung des mit dem Zahnkranz der Gewindemutter in Eingriff stehenden Zahnrades bzw. der Schnecke und dessen bzw. deren Schaftes praktisch ohne zusätzliche Raumbeanspruchung zwischen den drei Führungselementen angeordnet sein kann.

Durch die Neigung der Lagerbohrung bzw. der Achse des darin gelagerten Zahnrades bzw. Schaftes gemäß Anspruch 8 wird die Zugänglichkeit des Antriebschaftes zum Antrieb der Gewindemutter günstiger gestaltet.

Die Ausgestaltungen des Druckfedernspanners gemäß Anspruch 9 und 10 sind insofern vorteilhaft, als sie auf einfache Weise eine optimale Verbindung zwischen den Führungselementen und der Gewindespindel einerseits und dem festsitzend an diesen befestigten Klammernhalter andererseits gewährleisten. Durch die an sich nicht unbedingt erforderliche, gemäß Anspruch 11 vorgesehene Lagerbrücke wird mit einfachen Mitteln, die mit geringem Raumbedarf auskommen, eine bessere Stabilität und größere Sicherheit bei der Handhabung erzielt.

Die Ausgestaltung des Druckfedernspanners nach Anspruch 12 gewährleistet eine besonders in axialer Richtung raumsparende Lagerung der Gewindespindel im beweglichen Klammernhalter bei zugleich hoher Belastbarkeit des zwischen der Gewindemutter und dem zweiten beweglich auf den Führungsrohren oder -stäben gelagerten Klammernhalter vorgesehenen Axiallagers in Form des Lagerkugelnkranzes.

Durch die Ausgestaltung des Druckfedernspanners nach Anspruch 13 ist eine einfache axiale Sicherung der Gewindemutter im zweiten Klammernhalter in Gegenspannrichtung gegeben, die mit einer zusätzlichen zentrierenden Führung für die Gewindemutter kombiniert ist.

Durch die Ausgestaltungen nach den Ansprüchen 14 und 15 wird nicht nur die Handhabung insofern erleichtert und verbessert, als bei engen Raumverhältnissen im Radkasten eines Fahrzeuges, wo eine zu spannende Druckfeder untergebracht ist, die eine oder andere Greiferklammer zunächst gelöst vom Druckfedernspanner an der Feder angesetzt und danach problemlos mit dem zugehörigen Klammernhalter verbunden werden kann, sondern es wird durch die vorgesehenen Verbindungselemente zwischen den Greiferklammern und den jeweils zugehörigen Klammernhaltern eine nicht nur formschlüssige, sondern zugleich auch kraftschlüssige Verbindung geschaffen, durch welche die Sicherheit wesentlich erhöht wird und welche die Möglichkeit eröffnet, zur Sicherung der Verbindung gemäß Anspruch 16 ein bolzen- oder schaftartiges Verbindungsorgan mit relativ geringem Querschnitt zu verwenden.

Die meisten als Schraubenfedern ausgebildeten Achsefedern sind in den Kraftfahrzeugen so eingebaut, daß sie auch dann noch eine gewisse Vorspannung haben, wenn die betreffenden Achsen des Fahrzeuges beispielsweise auf einer Hebebühne vollständig entlastet sind. Das bedeutet, daß die betreffenden Druckfedern, so lange sie noch im Fahrzeug eingebaut sind, auch bei entlasteten Achsen nicht ihre dem entspannten Zustand entsprechende natürliche Länge annehmen können und daß ihre Windungen auch nicht den maximalen, dem entspannten Zustand entsprechenden Abstand einnehmen können. Je nach den im Fahrzeug um die Druckfedern herum gegebenen Raumverhältnisse kann es der Fall sein, daß mit den beiden Greiferklammern des Druckfedernspanners nur so viele Windungen der Druckfeder erfaßt und soweit gespannt werden können, daß die betreffende Feder aus dem Fahrzeug ausgebaut werden kann, daß aber der maximale Abstand der beiden Greiferklammern nicht ausreicht, um die zwischen den Greiferklammern liegenden Windungen vollständig zu entspannen. In solchen Fällen ist mit den herkömmlichen Druckfedernspannern eine völlige kontrollierte Entspannung der aus dem Fahrzeug ausgebauten Druckfeder nur mit Hilfe eines zweiten Druckfedernspanners möglich. Umgekehrt ist es auch nur mit Hilfe von zwei solchen Federnspannern möglich, die in das Fahrzeug einzubauende Druckfeder so weit vorzuspannen, daß sie die erforderliche verkürzte Einbaulänge erhält.

Um diesem Umstand Rechnung zu tragen und einen Druckfedernspanner zu schaffen, der einen vergrößerten zweistufigen Spannbereich aufweist, ist die Ausgestaltung des erfindungsgemäßen Druckfedernspanners nach den Ansprüchen 19 bis 23 vorgesehen.

Anhand der Zeichnung ist im folgenden die Erfindung an mehreren Ausführungsbeispielen näher erläutert. Es zeigt:

Fig. 1 einen mit drei Führungsrohren versehenen Druckfedernspanner mit einer separat dargestellten Greiferklammer;

Fig. 2 einen Querschnitt durch den beweglichen Klammernhalter;

Fig. 3 einen Schnitt III-III aus Fig. 2;

Fig. 4 in einer Schnittdarstellung die Befestigung eines Führungsrohres und der Gewindespindel im festsitzenden Klammernhalter;

Fig. 5 einen Schnitt V-V aus Fig. 2;

Fig. 6 einen Teilschnitt VI-VI aus Fig. 1;

Fig. 7 eine zur Darstellung der Fig. 6 analoge Schnittdarstellung der den beweglichen Klammernhalter mit seiner Greiferklammer verbindenden Elemente;

Fig. 8 einen mit nur zwei Führungsrohren versehenen Druckfedernspanner mit separat dargestellter Greiferklammer des beweglichen Klammernhalters;

Fig. 9 die Verbindung zwischen dem beweglichen Klammernhalter der Fig. 8 und seiner Greiferklammer im Schnitt;

Fig. 10 einen Federnspanner mit erweitertem zweistufigen Spannbereich in perspektivischer Ansicht;

Fig. 11 die Anordnung und Lagerung der Führungsrohre und Gewindespindeln des Federnspanners der Fig. 10 im Schnitt;

Fig. 12 die Anordnung eines Hubbegrenzers zwischen einer Lagerbrücke und einem Klammernhalter.

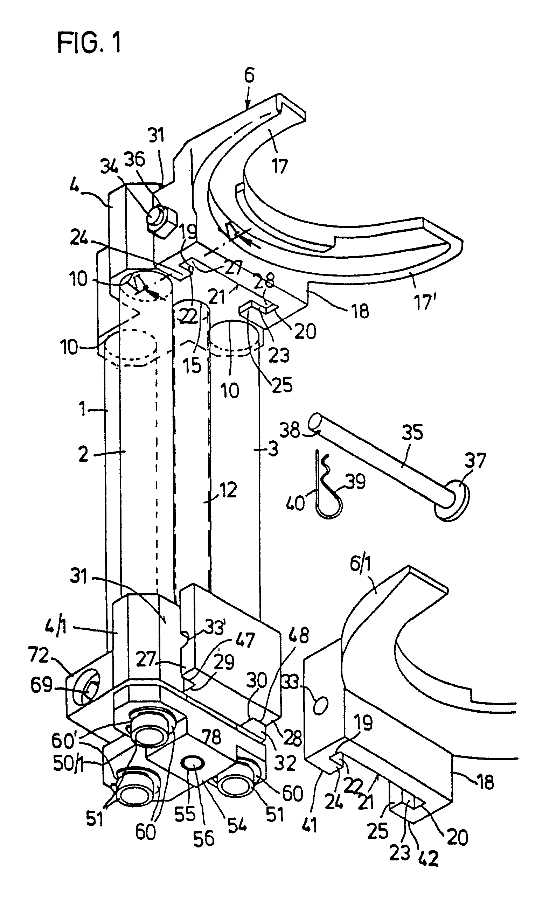

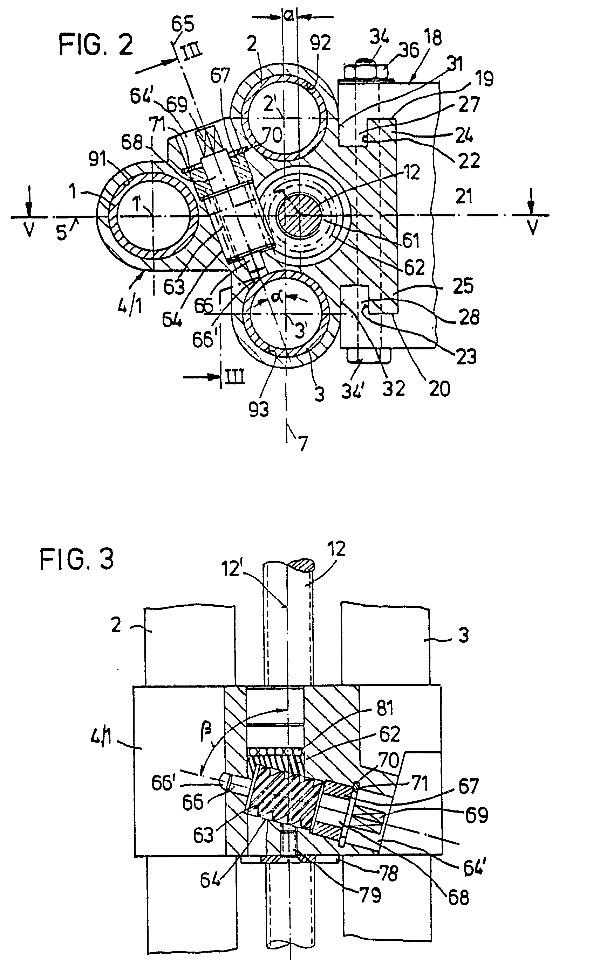

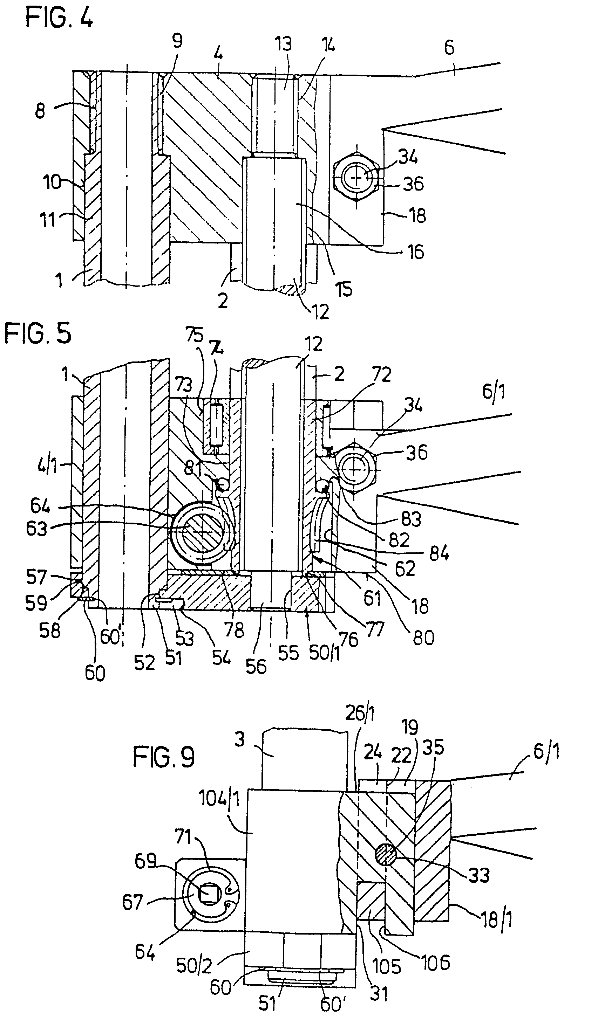

Der in den Fig. 1 bis 5 dargestellte Druckfedernspanner weist drei parallel zueinander verlaufende Führungsrohre 1, 2 und 3 auf, die festsitzend in einem in Draufsicht annähernd T-förmigen, blockartigen ersten Klammernhalter 4 befestigt sind. Dabei ist die Anordnung der Führungsrohre 1, 2 und 3, wie am besten aus Fig. 2 ersichtlich ist, so getroffen, daß die Achse 1' des einen Führungsrohres 1 in einer Mittelebene 5 liegt, welche zugleich die Symmetrieebene einer hufeisenförmigen, lösbar am Klammernhalter 4 befestigten Greiferklammer 6 bildet, während die Achsen 2' und 3' der beiden anderen Führungsrohre 2 und 3 in Symmetrielage beidseitig der Mittelebene 5 in einer Ebene 7 angeordnet sind, die rechtwinklig zur Mittelebene 5 verläuft. Die Achsen 1', 2' und 3' der Führungsrohre 1, 2, 3 liegen somit in den Ecken eines gleichschenkligen Dreiecks. Aus dieser Lage ergibt sich die im wesentlichen T-förmige Grundrißform bzw. Draufsichtform des Klammernhalters 4. Um einerseits eine exakt parallele Anordnung der Führungsrohre 1, 2, 3 zueinander und andererseits eine hochbelastbare Verbindung der Führungsrohre 1, 2, 3 mit dem Klammernhalter 4 zu erreichen, sind diese Führungsrohre 1, 2, 3 in der in Fig. 4 am Beispiel des Führungsrohres 1 dargestellten Weise in den Klammernhalter 4 eingesetzt. Dieser weist zur Aufnahme eines Durchmesser verjüngten Gewindeansatzes 8 des Führungsrohres 1 eine Gewindebohrung 9 auf, an die sich eine erweiterte Führungsbohrung 10 konzentrisch anschließt, in welcher der sich an den Gewindeansatz 8 anschließende Endabschnitt 11 des Führungsrohres 1 mit zentrierendem Paßsitz geführt ist.

Zwischen den beiden Führungsrohren 2 und 3 ist ebenfalls festsitzend im Klammernhalter 4 eine aus einem massiven Stab bestehende Gewindespindel 12 angeordnet. Diese Gewindespindel 12 weist ebenfalls einen im Durchmesser verjüngten Gewindeansatz 13 auf, der in eine Gewindebohrung 14 des Klammernhalters 4 eingeschraubt ist. An diese Gewindebohrung 14 schließt sich eine Paßbohrung 15 an, welche den sich unmittelbar an den Gewindeansatz 13 anschließenden Abschnitt 16 der Gewindespindel führend aufnimmt.

Wie aus Fig. 2 ersichtlich ist, ist die Gewindespindel 12 gegenüber der durch die beiden Achsen 2' und 3' verlaufenden Ebene 7 zur Greiferklammer 6 hin um einen Betrag a versetzt, der etwa dem vierten Teil des Durchmessers der Gewindespindel entspricht.

Auf den drei Führungsrohren 1, 2, 3 ist axial beweglich ein zweiter Klammernhalter 4/1 angeordnet, der im wesentlichen die gleiche Grundrißform aufweist wie der erste Klammernhalter 4 und an welchem auf die gleiche nachstehend beschriebene Weise eine zweite Greiferklammer 6/1 befestigt werden kann. Die Greiferklammern 6 und 6/1, die im wesentlichen hufeisenförmig ausgebildet sind und jeweils etwa halbkreisförmige, schraubenartig verlaufende, in deckungsgleicher Anordnung einander zugekehrte Auflageflächen 17 aufweisen, und mit je einem einstückig angeformten, zur Mittelebene 5 symmetrischen Halterblock 18 versehen, in den auf der der Auflagefläche 17 gegenüberliegenden Seite in T-artiger Anordnung zwei axiale Führungsnuten 19 und 20 eingearbeitet sind, die einerseits durch eine gemeinsame Wandfläche 21 und auf der gegenüberliegenden Seite durch parallel dazu verlaufende Führungsflächen 22 bzw. 23 begrenzt sind. Diese Führungsflächen 22 und 23 bilden zugleich die inneren Begrenzungsflächen zweier federartiger Leisten 24 und 25. Entsprechend sind die Klammernhalter 4, 4/1 jeweils auf ihren den Greiferklammern 6, 6/1 zugekehrten Seiten mit einem annähernd T-förmigen Aufnahmeblock 26 versehen, der zwei seitliche Führungsleisten 27 und 28 aufweist, die so gestaltet sind, daß sie mit geringem Spiel von den beiden Führungsnuten 19 und 20 des Halterblocks 18 der Greiferklammer 6 aufgenommen werden können. Dabei sind diese Führungsleisten 27 und 28 durch im Querschnitt rechteckige Axialnuten 29 und 30 von ebenfalls parallel zu den Führungsrohren verlaufenden Führungsflächen 31 und 32 getrennt. Die Breite dieser Axialnuten 29 und 30 ist wiederum so gestaltet, daß die Leisten 24 und 25 eines der Halterblöcke 18 mit geringem Spiel hineinpassen.

Dadurch, daß sowohl die Führungsnuten 19 und 20 des Halterblockes 18 als auch die Axialnuten 29 und 30 oben und unten jeweils offen sind, lassen sich die Leisten 24 und 25 der Halterblöcke 18 entweder von oben oder von unten in die Axialnuten 29 und 30 bzw. die Führungsleisten 27 und 28 in die Führungsnuten 19 und 20 einschieben. Um eine stabile Verbindung zwischen den so zusammengefügten Halterblöcken 18 der Greiferklammern 6, 6/1 einerseits und den Aufnahmeblöcken 26 der beiden Klammernhaltern 4 und 4/1 herzustellen, sind sowohl in den Halterblöcken 18 als auch in den Aufnahmeblöcken 26 jeweils Querbohrungen 33 bzw. 33' angeordnet, durch welche Steckbolzen 34 oder 35 gesteckt werden können. Während der Steckbolzen 34 an seinem einen Ende mit einem Sechskantkopf 34' und am anderen Ende mit einem Gewinde versehen ist und durch eine Mutter 36 gesichert werden kann, ist der glatte, zylindrischen Steckbolzen 35 an seinem einen Ende mit einem Flanschkopf 37 und am anderen Ende mit einer Querbohrung 38 zur Aufnahme eines mit einem Federschenkel 39 ausgerüsteten Splintstiftes 40 versehen.

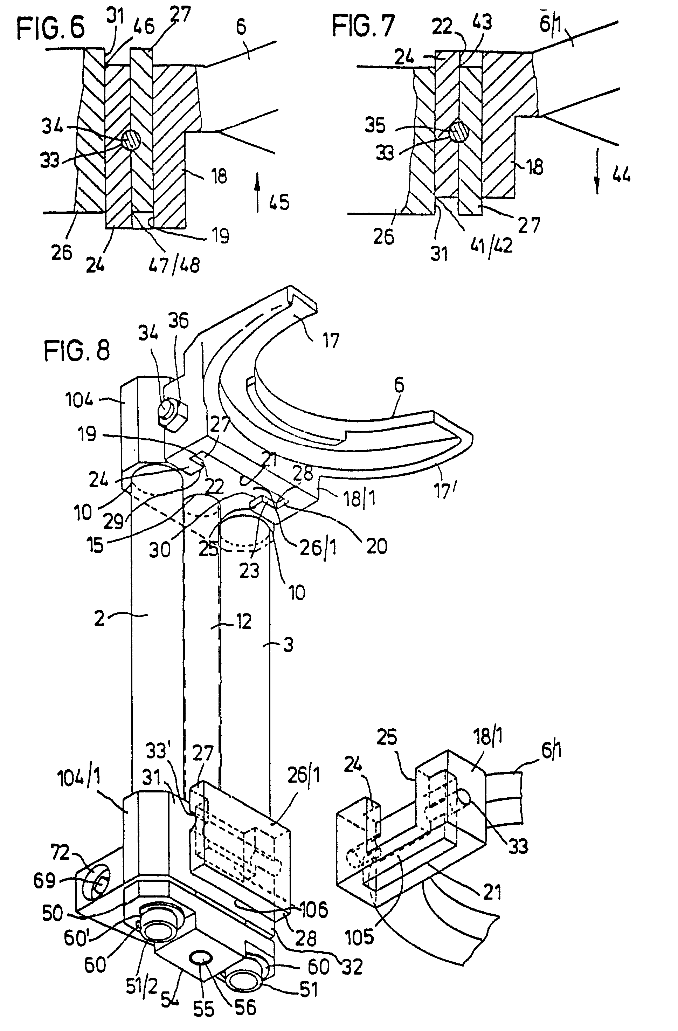

Wie am besten aus den Fig. 6 und 7 ersichtlich ist, ist die Anordnung der die Steckbolzen 34 oder 35 aufnehmenden Querbohrungen 33 bzs. 33' so getroffen, daß die in Axialrichtung der Führungsrohre 1, 2, 3 zumindest annähernd gleich langen Halteblöcke 18 und Aufnahmeblöcke 26 in axialer Richtung, z.B. um 5 mm, zueinander versetzt sind, wenn einer der Steckbolzen 34 oder 35 in diese Querbohrungen 33 und 33' gesteckt ist.

Bei dieser relativen Lage eines Halteblockes 18 zum zugeordneten Aufnahmeblock 26 ist sichergestellt, daß bei der Greiferklammer 6/1 die in der Zeichnung untenliegenden, quer verlaufenden, äußeren Begrenzungskanten 41 und 42 jeweils auf den Führungsflächen 31 und 32 des Klammernhalters 41 aufliegen, während die in der Fig. 1 nicht sichtbaren oben liegenden, inneren, ebenfalls quer verlaufenden Begrenzungskanten 43 (Fig. 7) der Führungsleisten 27 und 28 an den Führungsflächen 22 und 23 der Leisten 24 und 25 des Halteblockes 18 anliegen. Dadurch wird erreicht, daß bei einer in Richtung des Pfeiles 44 auf die Greiferklammer 6/1 einwirkenden Federkraft die Führungsflächen 22 und 23 der Leisten 24 und 25 gegen die Begrenzungskanten 43 und die Begrenzungskanten 41 und 42 gegen die Führungsflächen 31 und 32 gepreßt werden. Dadurch entsteht eine kraftschlüssige Klemmverbindung zwischen dem Halteblock 18 einerseits und dem Aufnahmeblock 26 andererseits, durch welche der Steckbolzen 35 entlastet wird. Das bedeutet, daß der Steckbolzen 35 nur einen geringen Teil der auf die Greiferklammer 6/1 in Pfeilrichtung 44 einwirkenden Kraft aufzunehmen braucht. Dasselbe gilt auch für die Verbindung zwischen dem Halteblock 18 der Greiferklammer 6 und dem Aufnahmeblock 26 des Klammernhalters 4 in analoger Weise (Fig. 6). Durch die beim Spannen einer Druckfeder auf die Greiferklammer 6, in Richtung des Pfeiles 45 einwirkende Kraft entsteht, bezogen auf die Achse des Steckbolzens 34, am Halterblock 18 ein Kippmoment, durch welches die oberen, äußeren, quer verlaufenden Begrenzungskanten 46 der Leisten 24 und 25 des Halteblockes 18 gegen die Führungsflächen 31 und 32 des Klammernhalters 4 und die unteren quer verlaufenden Begrenzungskanten 47 und 48 der Führungsleisten 27 und 28 gegen die Führungsflächen 22 und 23 der Leisten 24 bzw. 25 gepreßt werden. Auch hierbei entsteht in der gleichen Weise eine kraftschlüssige Klemmverbindung zwischen dem Halteblock 18 einerseits und dem Aufnahmeblock 26 andererseits, so daß auch der Steckbolzen 34 nicht die gesamte Druckkraft, die in Richtung des Pfeiles 45 auf die Greiferklammer 6 einwirkt, auszuhalten braucht. Um diesen Klemmeffekt noch zu erhöhen, könnte man die jeweils quer verlaufenden Begrenzungskanten 41, 42, 43 bzw. 46, 47, 48 jeweils mit geringfügig vorspringenden Kerbnasen versehen, die sich in die Führungsflächen 31, 32 bzw. 22, 23 eingraben. Aber auch ohne solche Kerbnasen ist durch die vorstehend beschriebene Anordnung eine wesentliche Erhöhung der Betriebssicherheit erreicht, wobei sichergestellt ist, daß die Belastbarkeit der Verbindung zwischen den Greiferklammern 6 bzw. 6/1 und den Klammernhaltern 4 bzw. 4/1 nicht auf die Scherfestigkeit der Steckbolzen 34 bzw. 35 begrenzt ist.

Bei extrem hohen Druckkräften an den Greiferklammern 6, 6/1 ist die Verwendung des als Schaftschraube ausgebildeten Steckbolzens 34 mit der Gewindemutter 36 insofern vorteilhafter, als damit zusätzlich eine Spannkraft in Querrichtung auf die die Leisten 24, 25 aufweisenden L-förmigen Schenkel des Halterblockes 18 ausgeübt und dadurch die Gefahr des Auseinanderdrückens dieser Schenkel erheblich vermindert werden kann.

Wo diese Gefahr nicht besteht, kann ohne weiteres der Steckbolzen 35 mit dem Splintstift 40 verwendet werden.

Die in Fig. 1 und 5 unten liegenden Enden der Führungsrohre 1, 2, 3 sind durch eine flache Lagerbrücke 50/1 miteinander verbunden. Diese Lagerbrücke 50/1 hat im wesentlichen die gleiche Grundrißform wie der Klammernhalter 4. Um die Lagerbrücke 50/1 auf einfache Weise an den Enden der Führungsrohre 1, 2, 3 befestigen zu können, sind diese wie aus Fig. 5 ersichtlich ist, jeweils mit im Durchmesser verjüngten zylindrischen Endabschnitten 51 versehen, welche eine Durchmesser angepaßte Bohrungen 52 der Lagerbrücke 50/1 durchragen. Auf der Unterseite ist die Lagerbrücke 50/1 im Bereich der Endabschnitte 51 der Führungsrohre 1, 2, 3 jeweils mit Ausnehmungen 53 versehen, während sich zwischen diesen Ausnehmungen 53 eine klotzartige Verdickung 54 mit einer Lagerbohrung 55 zur Aufnahme eines Lagerzapfens 56 der Gewindespindel 12 befindet. An die auf den verjüngten Durchmesser des Endabschnittes 51 abgestimmte Bohrung 52 schließt sich auf der der Ausnehmung 53 gegenüberliegenden Seite der Lagerbrücke 50/1 jeweils eine im Durchmesser erweiterte zylindrische Bohrung 57 an, die auf den Außendurchmesser des betreffenden Führungsrohres 1, 2, 3 abgestimmt ist. Zwischen der Bohrung 52 und der Bohrung 57 entsteht somit eine Radialschulter 58, welche auf der Ringschulter 59 des jeweils in der Bohrung 57 steckenden Führungsrohres 1, 2, 3 aufliegt, so daß mit Hilfe einer in einer Ringnut 60' des Endabschnittes 51 eingesetzten Sicherungsscheibe 60 die Befestigung der Lagerbrücke 50/1 an den Enden der Führungsrohre 1, 2, 3 in der in Fig. 1 und 5 dargestellten Weise leicht hergestellt und wieder gelöst werden kann.

Da die Gewindespindel 12, wie vorstehend beschrieben, festsitzend, d.h. undrehbar, im ersten Klammernhalter 4 befestigt ist, bedarf es einer drehbeweglich im axial beweglichen Klammernhalter 4/1 gelagerten Gewindemutter, deren Anordnung und Form in Fig. 2, 3 und 5 dargestellt ist.

Diese Gewindemutter 61 steht auf übliche Weise mit dem Außengewinde der Gewindespindel 12 in Gewindeeingriff. Durch ihre Drehung in der einen oder anderen Richtung erfährt sie eine Axialverschiebung auf der Gewindespindel 12. Um sie in Drehung versetzen zu können, ist diese Gewindemutter 61 mit einem als Schneckenradverzahnung ausgebildeten Zahnkranz 62 versehen, in welchen eine Schnecke 63 eingreift. Diese Schnecke 63 ist in einer Lagerbohrung 64 des Klammernhalters 4/1 drehbar gelagert, die zwischen der Gewindespindel 12 und dem Führungsrohr 1 angeordnet ist. Die Achse 65 der Lagerbohrung 64 bildet mit der die beiden Achsen 2' und 3' der Führungsrohre 2 und 3 miteinander verbindenden Ebene einen Winkel $\alpha$ von ca. 20° und, wie aus Fig. 3 ersichtlich ist, mit der Achse 12' der Gewindespindel 12 einen Neigungswinkel $\beta$ von etwa 75°. Gelagert ist die Schnecke 63 einerseits mittels eines Lagerzapfens 66 in einer Bohrung 66' und andererseits mittels einer Lagerbuchse 67, welche den zylindrischen Schaft 68 aufnimmt, der mit einem Schlüsselprofil 69 versehen ist. Die Lagerbuchse 67 ist mittels einer in einer Ringnut 70 der Lagerbohrung 64 sitzenden, radial federnden Sicherungsscheibe 71 in axialer Richtung gesichert. Das Schlüsselprofil 69 ist durch das offene Ende 64' der Lagerbohrung 64 zugänglich.

Die Gewindemutter 61 weist einen Hülsenschaft 72 auf, der eine zylindrische Axialbohrung 73 des Klammernhalters 4/1 mit geringem axialen Spiel durchragt und in einem Radial-Nadellager 74 aufgenommen ist, das in einer zylindrischen Lagerbohrung 75 des Klammernhalters 4/1 festsitzend untergebracht ist. Das gegenüberliegende Ende des Hülsenschaftes 72 ist mit einem im Durchmesser abgesetzten Ansatz 76 versehen, der in einer Bohrung 77 einer relativ dünnen Deckelplatte 78 geführt ist. Die Deckelplatte 78 ist, wie in Fig. 3 angedeutet, mittels Senkschrauben 79 an der unteren Stirnfläche 80 des Klammernhalters 4/1 befestigt. Als Axialstützlager ist ein Kranz von Lagerkugeln 81 vorgesehen, der zwischen einer radialen Stützschulter 82 des Hülsenschaftes 72 einerseits und einer Radialschulter 83 des Klammernhalters 4/1 andererseits angeordnet ist. Die Radialschulter 83 wird gebildet durch den Übergang von der im Durchmesser größeren Aufnahmebohrung 84, in welcher die Schneckenradverzahnung 62 untergebracht ist, zu der Axialbohrung 73. Durch das Vorsehen dieses Kranzes von Lagerkugeln 81 als Axialdrucklager kann der axiale Raumbedarf in diesem Bereich auf ein Minimum reduziert werden.

Der Vollständigkeit halber sei noch erwähnt, das das Gewinde der Gewindemutter 61 sich nicht über die gesamte axiale Länge des Hülsenschaftes 72 zu erstrecken braucht. Zweckmäßig und vorteilhaft ist es jedoch in jedem Falle, wenn zwischen der Gewindemutter 61 und der Gewindespindel 12 im Bereich des Radiallagers 74 ein Gewindeeingriff vorhanden ist.

Es ist aus den Fig. 2 und 5 ersichtlich, daß die Führungsrohre 1, 2 und 3 jeweils in durchgehenden, d.h. oben und unten offenen, Führungsbohrungen 91, 92 bzw. 93 des beweglichen Klammernhalters 4/1 geführt sind, wobei jeweils zwischen den Führungsrohren 1, 2 und 3 und diesen Führungsbohrungen 91, 92 und 93 ein sog. Schiebepaßsitz besteht, der einerseits eine exakte Führung des Klammernhalters 4/1 während dessen Axialbewegung und andererseits in Ruhe, d.h. dann, wenn von der Gewindespindel und der mit dieser in Eingriff stehenden Gewindemutter keine Verschiebekräfte auf den Klammernhalter 4/1 einwirken, in Folge des von der gespannten Druckfeder ausgeübten Kippmomentes einen selbsthaltenden Klemmsitz ermöglicht bzw. gewährleistet.

Durch die Schrägstellung der Achse 65 der Lagerbohrung 64 zur Ebene 7, die sich im Winkel $\alpha$ ausdrückt, ergibt sich, wie ohne weiteres aus Fig. 2 ersichtlich ist, eine sehr kompakte, d.h. sehr raumsparende Bauweise, während durch die aus Fig. 3 erkennbare Schrägstellung der Achse 65 in bezug auf die Mittelebene 5 bzw. in bezug auf die in dieser Mittelebene 5 liegende Achse 12' der Gewindespindel 12 die handhabungsmäßig vorteilhafte Möglichkeit gegeben ist, zum Drehen der Schnecke 63 ein Schlüsselwerkzeug in Schräglage am Schlüsselprofil 69 des Schaftes 68 anzusetzen.

Durch die vorstehend beschriebene lösbare Verbindung zwischen den Greiferklammern 6 und 6/1 einerseits und den Klammernhaltern 4 bzw. 4/1 wird noch ein weiterer handhabungsmäßiger Vorteil erzielt, nämlich der, daß die eine oder andere Greiferklammer 6 oder 6/1 zunächst losgelöst vom Federnspanner auf die zu spannende Feder aufgesetzt und erst danach mit dem Federnspanner, d.h. mit dessen Klammernhalter 4 bzs. 4/1 verbunden werden kann. Dies ist insbesondere dann wichtig, wenn beim Ein- und Ausbau einer Druckfeder an einem Kraftfahrzeug enge Raumverhältnisse gegeben sind.

Der vorstehend anhand der Fig. 1 bis 7 beschriebene Federnspanner ist für extrem hohe Spannkräfte ausgelegt, die unter Berücksichtigung des Sicherheitsfaktors bis zu 70.000 N (Newton) betragen, wobei der Sicherheitsfaktor etwa dem 3,5-fachen der maximalen Federkräfte von 20.000 N entsprechen, die mit dem Federnspanner beim Spannen einer solchen extrem starken Feder auftreten können.

Der in Fig. 8 dargestellte Federnspanner unterscheidet sich von dem vorstehend beschriebenen Federnspanner, der im einzelnen in den Fig. 1 bis 7 dargestellt ist, im wesentlichen dadurch, daß er nur zwei statt drei Führungsrohre 2 und 3 aufweist, zwischen denen die Gewindespindel 12 in der gleichen Weise angeordnet ist wie beim Federnspanner der Fig. 1.

Durch den Wegfall des dritten Führungsrohres 1 ergibt sich auch eine schmälerer Grundrißform der beiden Klammernhalter 104 und 104/1, in dem jeweils der Teil, der bei dem Klammernhaltern 4 und 4/1 zur Aufnahme des dritten Führungsrohres 1 vorgesehen ist, weggelassen ist. Die Befestigung der beiden Führungsrohre 2 und 3 sowie der Gewindespindel 12 im feststehenden Klammernhalter 104 ist auf die gleiche Weise durchgeführt wie beim Klammernhalter 4, nämlich so wie es vorstehend unter Bezugnahme auf die Fig. 4 beschrieben ist.

Auch der Klammernhalter 104/1 hat im übrigen den gleichen Aufbau wie der Klammernhalter 4/1. Auch die Gewindemutter 61 mit dem als Schneckenradverzahnung ausgebildeten Zahnkranz 62 und der Schnecke 63 in einer Lagerbohrung 64 ist auf die gleiche Weise verwirklicht wie dies anhand der Fig. 2 und 3 beschrieben ist. Die Lagerbrücke 50/2 ist ebenfalls ohne den das dritte Führungsrohr 1 aufnehmenden Teil ausgebildet und stellt sich somit als einfacher, länglicher Quersteg dar, der auf die gleiche Weise an den Enden der beiden Führungsrohre 2 und 3 befestigt ist wie die Lagerbrücke 50/1. Auch der Zapfen 56 der Gewindespindel 12 ist auf die gleiche Weise in der Lagerbrücke 50/2 gelagert wie in der Lagerbrücke 50/1.

Es versteht sich, daß dieser mit nur zwei Führungsrohren 2 und 3 ausgerüstete Druckfedernspanner eine geringere Belastbarkeit aufweist als der mit drei Führungsrohren ausgerüstete Druckfedernspanner der Fig. 1, wenn die Führungsrohre 2 und 3 jeweils die gleiche Dimension besitzen und aus dem gleichen Werkstoff bestehen. Gegenüber den bekannten Federnspannern, die jeweils nur ein einziges Führungsrohr aufweisen, ist jedoch auch der Druckfedernspanner der Fig. 8 mit nur zwei Führungsrohren um Vielfaches stärker belastbar.

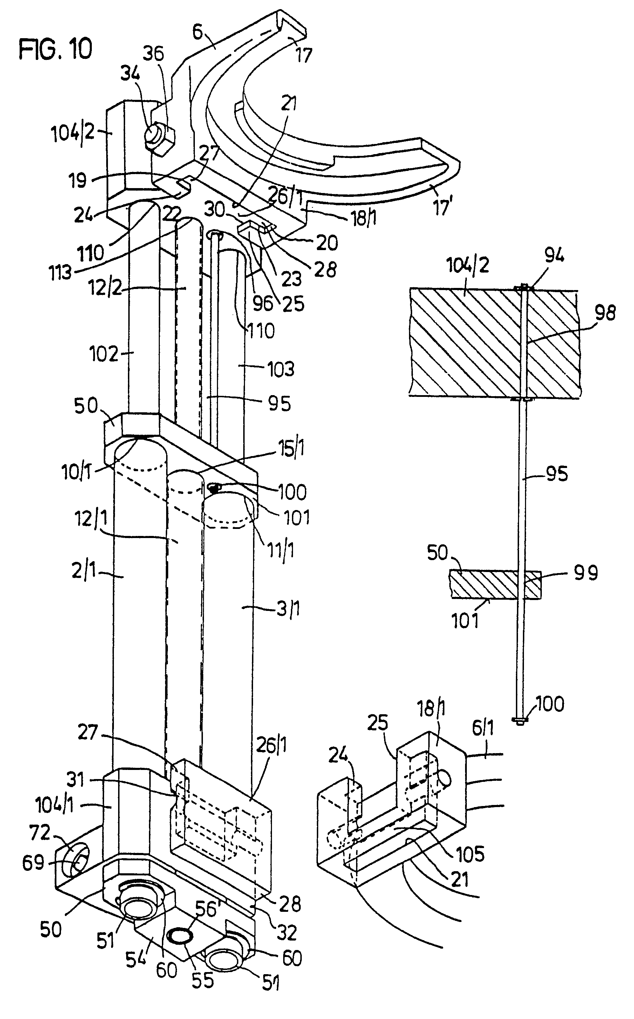

Die den Halteblöcken 18 entsprechenden Halteblöcke 18/1 der hier vorgesehenen Greiferklammern 6 und 6/1 sowie die den Aufnahmeblöcken 26 entsprechenden Aufnahmeblöcke 26/1 der beiden Klammernhalter 104 und 104/1 sind anders gestaltet. Bei den Halteblöcken 18/1 sind nämlich jeweils die Leisten 24 und 25 an den von den Auflageflächen 17 der Greiferklammern 6 bzw. 6/1 gegenüberliegenden Enden mit einem Verbindungssteg 105 versehen. Um diesen Verbindungssteg 105 in der in Fig. 9 dargestellten Weise aufnehmen zu können, sind die Aufnahmeblöcke 26/1 jeweils auf der dem gegenüberliegenden Aufnahmeblock abgewandten Seite mit einer nutartigen Ausnehmung 106 versehen. Durch diese Ausgestaltung der Halteblöcke 18/1 und der Aufnahmeblöcke 26/1 wird die Handhabung des Federnspanners insofern erleichtert, als beim Zusammenfügen der Halteblöcke 18/1 und der Aufnahmeblöcke 26/1 jeweils ein Anschlag vorhanden ist, durch welchen das Ausrichten der Querbohrungen 33 und 33' zum Einführen des Steckbolzens 34 oder 35 selbsttätig erfolgt.

Im übrigen ist auch diese Anordnung so getroffen wie bei den Halte- und Aufnahmeblöcken 18 bzw. 26 des Federnspanners der Fig. 1, so daß auch hier die anhand der Fig. 6 und 7 erläuterten Klemmwirkungen bei Belastung erzielt werden.

Aus den Fig. 1, 4, 5, 6, 7 und 8 ist erkennbar, daß die Greiferklammer 6 am oberen Ende, d.h. an dem der zweiten Greiferklammer 6/1 abgewandten Ende ihres Halteblocks 18 bzw. 18/1 angeordnet ist, und daß die zweite Greiferklammer 6/1 an dem der ersten oder oberen Greiferklammer zugewandten Ende ihres Halterblocks 18 bzw. 18/1 angeordnet ist.

Dadurch ist es möglich, die obere d.h. die am feststehenden Klammernhalter 4 bzw. 104 befestigte bzw. zu befestigende Greiferklammer 6 auch bei engen und ungünstigen Raumverhältnissen am Fahrzeug an einer möglichst weit oben liegenden Windung der zu spannenden Feder anzusetzen. Da aber an der unteren, d.h. an der am beweglichen Klammernhalter befestigten, Greiferklammer 6/1 der axiale Versatz am Halterblock 18 bzw. 18/1 ausgeglichen ist, ist trotzdem sichergestellt, daß die jeweils zwischen den Greiferklammern 6 und 6/1 liegenden Windungen der zu spannenden Feder so stark gespannt werden können, daß sie unmittelbar aufeinander liegen. Das bedeutet, daß bei gegebenen engen Raumverhältnissen, insbesondere bei auch in axialer Richtung der zu spannenden Feder am Fahrzeug begrenzten Zugrifflänge, möglichst viele Windungen erfaßt und völlig zusammengepreßt werden können, um eine maximale Federkürzung für den Aus- bzw. Einbau zu erreichen.

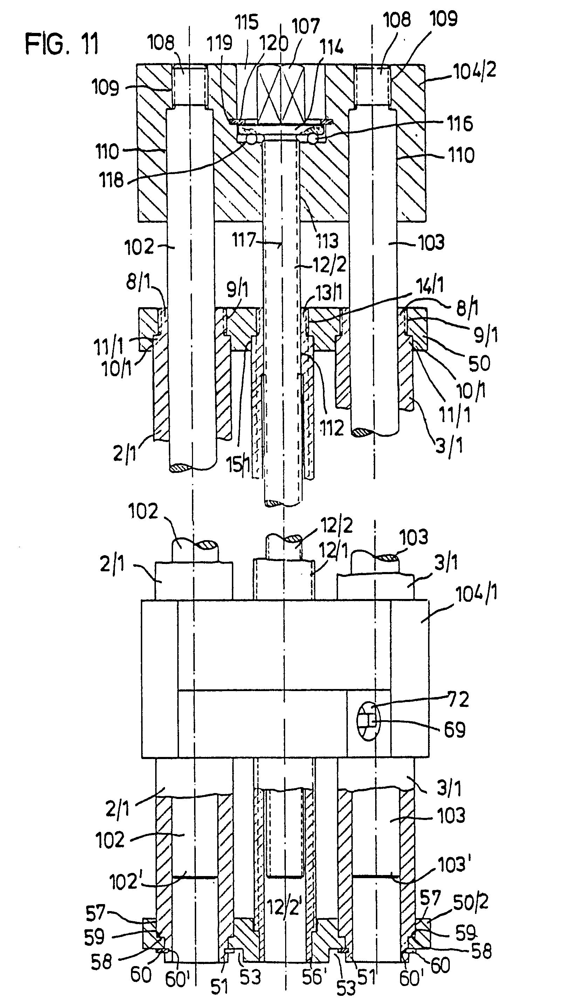

Bei dem in den Fig. 10 und 11 dargestellten Druckfedernspanner ist auf zwei Führungsrohren 2/1 und 3/1 der gleiche Klammernhalter 104/1 angeordnet wie bei dem Druckfedernspanner der Fig. 8. Entsprechend ist auch die gleiche Greiferklammer 6/1 mit dem auf den Aufnahmeblock 26/1 passenden Halterblock 18/1 zur Befestigung an diesem Klammernhalter 104/1 vorgesehen. Die unteren Enden der Führungsrohre 2/1 und 3/1 sind in der gleichen Weise an der gleichen Lagerbrücke 50/2 befestigt wie beim Ausführungsbeispiel der Fig. 8. Die oberen Enden der beiden Führungsrohre 2/1 und 3/1 sind jedoch nicht im ersten Klammernhalter 104 befestigt sondern in einer flachen Lagerbrücke 50, welche die gleiche Grundrißform aufweist wie die Lagerbrücke 50/2, die aber keine Verdickung 54 besitzt. Weil die Lagerbrücke 50 eine wesentlich geringere Dicke aufweist als der Klammernhalter 4 bzw. 104 sind die beiden Führungsrohre 2/1 und 3/1 jeweils mit kürzeren, im Durchmesser verjüngten Gewindeansätzen 8/1 versehen, die in entsprechende Gewindebohrungen 9/1 der Lagerbrücken 50 fest eingeschraubt sind und deren Länge etwa der halben Dicke der Lagerbrücke 50 entspricht. An die Gewindebohrungen 9/1 schließen sich jeweils Führungsbohrungen 10/1 an, in welche die sich unmittelbar an die Gewindeansätze 8/1 anschließenden Endabschnitte 11/1 der Führungsrohre 2/1 bzw. 3/1 mit Paßsitz hineinragen. Die Lagerbrücke 50 verbindet somit die beiden in Parallellage zueinander verlaufenden Führungsrohre 2/1 und 3/1 in der gleichen Weise, wie der Klammernhalter 104 die beiden Führungsrohre 2 und 3 festsitzend miteinander verbindet. Statt der aus einem massiven Stab bestehenden Gewindespindel 12 ist bei dieser Ausführungsform der Fig. 10 und 11 eine hohle, d.h. rohrartig ausgebildete Hauptgewindespindel 12/1 vorgesehen, deren oberes Ende mittels eines im Durchmesser verjüngten Gewindesatzes 13/1 in eine Gewindebohrung 14/1 der Lagerbrücke 50 festsitzend und undrehbar eingeschraubt ist und die mittels eines Hohlzapfens 56' am anderen Ende in der Bohrung 55 der Lagerbrücke 50/2 gelagert ist. An die Gewindebohrung 14/1 schließt sich eine im Durchmesser auf den Außendurchmesser der Hauptgewindespindel 12/1 abgestimmte zylindrische Bohrung 15/1 an, in welche das Außengewinde der Hauptgewindespindel 12/1 passend hineinragt und so eine gute zentrierende Führung erhält. Diese Hauptgewindespindel 12/1 weist im Bereich der Lagerbrücke 50 ein Innengewinde 112 auf, dessen axiale Länge etwa der doppelten Dicke der Lagerbrücke 50 entspricht und in welches eine aus einem massiven Schaft bestehende Hilfsgewindespindel 12/2 eingeschraubt ist. Diese Hilfsgewindespindel 12/2 ist drehbar in einer Bohrung 113 eines dem Klammernhalter 104 entsprechenden ersten Klammernhalters 104/2 drehbar geführt und mit einem Ringflansch 114 versehen, der in einer zylindrischen Ausnehmung 115 untergebracht ist und sich auf einem Lagerkugelnkranz 116 abstützt, der konzentrisch zur Achse 117 zwischen dem Ringflansch 114 und einer Ringschulter 118 der Ausnehmung 115 angeordnet ist und ein axiales Stützlager für die Hilfsgewindespindel 12/2 bildet. Außenseitig ist der Ringflansch 114 durch eine in einer Ringnut 119 der Ausnehmung 115 sitzenden Ringscheibe 120 gegen axiale Verschiebung innerhalb des Klammernhalters 104/2 gesichert. Um die Hilfsgewindespindel 12/2 in der festsitzenden Hauptgewindespindel 12/1 drehen und somit eine axiale Verschiebung des Klammernhalters 104/2 gegenüber der Lagerbrücke 50 bzw. gegenüber dem Klammernhalter 104/1 bewirken zu können, ist die Hilfsgewindespindel 12/2 außerhalb des Ringflansches 114 mit einem Schlüsselprofil versehen, welches innerhalb der Ausnehmung 115 angeordnet ist.

Parallel zu der Hilfsgewindespindel 12/2 verlaufend sind Verlängerungsstäbe 102 und 103 im Klammernhalter 104/2 befestigt, welche teleskopartig in die Führungsrohre 2/1 und 3/1 hineinragen und in diesen jeweils mit geringem radialem Spiel axial verschiebbar exakt geführt sind. Diese Verlängerungsstäbe 102 und 103, die auch als Rohre ausgebildet sein könnten, sind festsitzend mittels im Durchmesser verjüngten Gewindeansätzen 108 in Gewindebohrungen 109 des Klammernhalters 104/2 befestigt und in Paßbohrungen 110 auf die gleiche Weise geführt bzw. befestigt wie die Führungsrohre 2 und 3 im Klammernhalter 104.

Die Länge der Verlängerungsstäbe 102 und 103 sowie der Hilfsgewindespindel 12/2 ist jeweils so gewählt, daß dann, wenn der Klammernhalter 104/2 an der Außenseite der Lagerbrücke 50 anliegt ihre unteren Enden 102', 103' bzw. 12/2' etwa bündig sind mit den Enden 51 der Führungsrohre 2/1 und 3/1 bzw. mit dem Hohlzapfen 56' der Hauptgewindespindel 12/1 und jedenfalls nicht aus diesen herausragen.

Während der verschiebbar auf den Führungsrohren 2/1 und 3/1 gelagerte zweite Klammernhalter 104/1 genau gleich ausgebildet ist wie beim Ausführungsbeispiel der vorstehend genannten Art, ist der Klammernhalter 104/2, der mit Hilfe der Hilfsgewindespindel 12/2 und den beiden Verlängerungsstäben 102 und 103 relativ zur Lagerbrücke 50 und zu den beiden Führungsrohren 2/1 und 3/1 bzw. zur Hauptgewindespindel 12/1 in axialer Richtung verschiebbar ist, wie der Klammernhalter 104 mit einem Aufnahmeblock 26/1 und einer dazu passenden Greiferklammer 6 versehen, welche einen Halterblock 18/1 aufweist.

Um zu vermeiden, daß die beiden Verlängerungsstäbe 102 und 103 mit Hilfe der Hilfsgewindespindel 12/2 zu weit aus den Führungsrohren 2/1 und 3/1 herausgezogen werden und dadurch die erforderliche Stabilität nicht mehr gewährleistet wäre, ist ein Hubbegrenzer in Form eines Stabes 95 vorgesehen, der mit Hilfe von zwei Sicherungsscheiben 94 und 96 in einer Bohrung 98 des Klammernhalters 104/2 axial unverschiebbar befestigt ist und der durch eine Bohrung 99 der Lagerbrücke 50 axial verschiebbar hindurchragt und an seinem unteren Ende mit einer weiteren Sicherungsscheibe 100 versehen ist, welche als Anschlag dient. Wenn diese Sicherungsscheibe 100 an der dem zweiten Klammernhalter 104/1 zugekehrten Stirnfläche 101 der Lagerbrücke 5 anschlägt, ist der maximale Bewegungshub des Klammernhalters 104/2 relativ zur Lagerbrücke 50 bzw. zum anderen Klammernhalter 104/1 erreicht. Die Verlängerungsstäbe ragen dabei noch um ein Maß in die Führungsrohre 2/1 und 3/1, welches etwa der Dicke des Klammernhalters 104/1 oder 104/2 entspricht.

Es ist klar, daß der Druckfedernspanner der Fig. 10 und 11 analog zum Druckfedernspanner der Fig. 1 auch mit einem dritten Führungsrohr 1 und dementsprechend auch mit einem dritten Verlängerungsstab versehen sein könnte.

Die praktische Anwendung des in Fig. 10, 11 und 12 dargestellten Druckfedernspanners ist im Prinzip gleich wie diejenige der Druckfedernspanner die in den Fig. 1 bis 9 dargestellt sind. Es besteht lediglich zusätzlich die Möglichkeit, einen größeren Federspannweg zu erzielen bzw. mehr Federwindungen zwischen den beiden Greiferklammern 6 und 6/1 aufzunehmen bzw. Achsfedern, die in Vorspannung eingebaut worden sind, nach dem Ausbau aus dem Fahrzeug, wenn die Länge der Führungsrohre 2/1 und 3/1 bzw. der maximale Bewegungshub des Klammernhalters 104/1 zur völligen Entspannung der eingespannten Feder nicht ausreicht, zusätzlich durch entsprechende Drehung der Hilfsgewindespindel 12/2 den Klammernhalter 104/2 mit der Greiferklammer 6 relativ zu den Führungsrohren 2/1 und 3/1 und der anderen Greiferklammer 6/1 auf einen größeren Abstand zu bringen, um die eingespannte Feder in kontrollierter Weise völlig zu entspannen. In umgekehrter Weise ist es natürlich möglich, vor dem Einbau beim Aufnehmen der Feder in den Druckfedernspanner die erforderliche Anzahl von Federwindungen zwischen den Greiferklammern 6 und 6/1 aufzunehmen um die ausreichende Vorspannung bzw. Kürzung der Druckfeder, die zum Einbau erforderlich ist, zu erreichen. Es ist insbesondere aus Fig. 10 erkennbar, daß sich der Klammernhalter 104/2 von der Lagerbrücke 50 um ein Maß verschiebbar, das etwa um die Dicke (axiale Erstreckung) des Klammernhalters 104/2 kleiner ist als die maximale Verschiebung des Klammernhalters 104/1 auf den Führungsrohren 2/1 und 3/1.

Dabei ist zu beachten, daß dieser Druckfedernspanner der Fig. 10 und 11 dann, wenn die beiden Verlängerungsstäbe 102 und 103 vollständig oder zumindest annähernd vollständig in die Führungsrohres 2/1 und 3/1 eingeschoben sind, die gleiche wenn nicht sogar eine höhere Stabilität aufweist, wie der Federnspanner der Fig. 8 oder der Fig. 1.

## Patentansprüche

1. Druckfedernspanner, insbesondere für Achsfedern von Kraftfahrzeugen, bestehend aus zwei durch wenigstens ein zylindrisches Führungselement (1, 2, 3) miteinander verbundenen koaxial zueinander angeordneten Klammernhaltern (4, 4/1), an denen in zueinander deckungsgleicher Anordnung im wesentlichen hufeisenförmige Greiferklammern (6, 6/1) befestigt sind, wobei der erste Klammernhalter am einen Ende des Führungselementes angeordnet und der zweite Klammernhalter mittels einer beidseitig offenen Führungsbohrung mit Schiebepaßsitz axial beweglich auf dem Führungselement geführt ist und eine axial unbeweglich gelagerte Gewindemutter (61) aufweist, die mit einer in achsparalleler Lage zum Führungselement in der gemeinsamen Mittelebene der beiden Greiferklammern angeordneten Gewindespindel (12) in Eingriff steht, durch welche der zweite Klammernhalter auf dem Führungselement relativ zum ersten Klammernhalter axial antreibbar ist, dadurch gekennzeichnet, daß zur Führung des zweiten Klammernhalters (4/1; 104/1) wenigstens zwei Führungsrohre (1; 2; 3) oder -stäbe parallel zueinander verlaufend beidseitig der Gewindespindel (12), symmetrisch zu der gemeinsamen Mittelebene, in der die Gewindespindel angeordnet ist, im ersten Klammernhalter (4; 104; 104/2) oder in einer ersten gemeinsamen Lagerbrücke (50) befestigt und an ihren gegenüberlegenden Enden durch eine zweite Lagerbrücke (50/1; 50/2) miteinander verbunden sind, wobei die Führungsrohre (1; 2; 3) oder -stäbe jeweils eine Führungsbohrung (91; 92; 93) des zweiten Klammernhalters (4/1; 104/1) führend durchragen.

2. Druckfedernspanner nach Anspruch 1, dadurch gekennzeichnet, daß die Gewindespindel (12) in bezug auf die gemeinsame Achsebene (7) der beiden symmetrisch zur Gewindespindel (12) angeordneten Führungsrohre (2; 3) oder -stäbe zur Seite der Greiferklammer (6; 6/1) hin versetzt angeordnet ist.

3. Druckfedernspanner nach Anspruch 1 oder 2, dadurch gekennzeichnet, daß die Gewindespindel (12) undrehbar im ersten Klammernhalter (4; 104) oder in der ersten Lagerbrücke (50) befestigt ist und daß die Gewindemutter (61) drehbar jedoch axial unverschiebbar im zweiten Klammernhalter (4/1; 104/1) gelagert und mit einem zu ihrer Drehachse (12') konzentrischen Zahnkranz (62) versehen ist, der mit einem Zahnrad in Form eines Kegel- oder Schraubrades oder einer Schnecke (63) in Eingriff steht, welches bzw. welche in einer im wesentlichen quer zur Gewindespindel (12) verlaufenden Lagerbohrung (64) des zweiten Klammernhalters (4/1; 104/1) drehbar gelagert und mit einem ein Schlüsselprofil (69) aufweisenden Schaft (68) versehen ist.

4. Druckfedernspanner nach Anspruch 1, 2 oder 3, dadurch gekennzeichnet, daß der Zahnkranz (62) der Gewindemutter (61) eine wenigstens vier mal größere Zähnezahl aufweist als das Kegel- oder Schraubenrad bzw. die Schnecke (63).

5. Druckfedernspanner nach Anspruch 3 oder 4, dadurch gekennzeichnet, daß die Achse (65) der Lagerbohrung (64) bzw. der Schnecke (63) spitzwinklig schräg zu der die beiden Achsen (2'; 3') der Führungsrohre (2; 3) verbindenden Ebene (7) verläuft.

6. Druckfedernspanner nach einem der Ansprüche 1 bis 5, dadurch gekennzeichnet, daß auf der den Greiferklammern (6; 6/1) gegenüberliegenden Seite der durch die Achsen (2'; 3') der beiden Führungsrohre (2, 3) verlaufenden Ebene (7) in der Mittelebene (5) der beiden Greiferklammern (6; 6/1) ein drittes Führungselement in Form eines Führungsrohres (1) oder -stabes angeordnet ist, welches an einem Ende festsitzend im ersten Klammernhalter (4; 104) oder in der ersten Lagerbrücke (50) befestigt und am anderen Ende durch die zweite Lagerbrücke (50/1) mit den beiden anderen Führungsrohren (2; 3) verbunden ist.

7. Druckfedernspanner nach einem der Ansprüche 3 bis 5, dadurch gekennzeichnet, daß die Lagerbohrung (64) der Schnecke (63) zwischen der Gewindespindel (12) und einer dritten Führungsbohrung (91) für das dritte Führungselement (1) angeordnet ist.

8. Druckfedernspanner nach einem der Ansprüche 3 bis 7, dadurch gekennzeichnet, daß die Achse (69) der Lagerbohrung (64) bzw. die Achse der in der Lagerbohrung (64) gelagerten Schnecke (63) derart zur Achse (12') der Gewindespindel (12) geneigt ist, daß das mit dem Schlüsselprofil (65) versehene Ende des Schaftes (68) einen anderen Abstand von der Ober- oder Unterseite (80) des Klammernhalters (4/1; 104/1) aufweist als die Schnecke (63) selbst.

9. Druckfedernspanner nach einem der Ansprüche 1 bis 8, dadurch gekennzeichnet, daß die Führungsrohre (1; 2; 3) oder -stäbe und/oder die Gewindespindel (12) jeweils in zylindrischen Paßbohrungen (10, 10/1, 15, 15/1) des ersten Klammernhalters (4; 104) bzw. der ersten Lagerbrücke (50) geführt sind.

10. Druckfedernspanner nach Anspruch 8, dadurch gekennzeichnet, daß die in den Paßbohrungen (10; 10/1; 15; 15/1) des ersten Klammernhalters (4; 104) bzw. der ersten Lagerbrücke (50) geführten Endabschnitte (11; 16) der Führungsrohre (1; 2; 3) oder -stäbe bzw. der Gewindespindel (12; 12/1) jeweils mittels im Durchmesser kleineren Gewindeansätzen (8; 8/1; 13; 13/1) in sich an die Paßbohrungen (10; 10/1; 15; 15/1) anschließende Gewindebohrungen (9; 9/1; 14; 14/1) eingeschraubt sind.

11. Druckfedernspanner nach Anspruch 9 oder 10, dadurch gekennzeichnet, daß die zweite Lagerbrücke (50/1; 50/2) mit einer Lagerbohrung (55) zur Aufnahme eines Lagerzapfens (56; 56') der Gewindespindel (12, 12/1) versehen ist.

12. Druckfedernspanner nach Anspruch 1, 2 oder 3, dadurch gekennzeichnet, daß die Gewindemutter (61) einen in einem Radiallager (74) des zweiten Klammernhalters (4/1; 104/1) geführten zylindrischen Hülsenschaft (72) und eine gegen den ersten Klammernhalter (4; 104; 104/2) gerichtete radiale Stützschulter (82) aufweist, wobei sich die Stützschulter (82) auf einen Kranz von Lagerkugeln (81) abstützt, welche auf einer in der Aufnahmebohrung (84) des zweiten Klammernhalters (4/1; 104/1) angeordneten radialen Ringschulter (83) aufliegen.

13. Druckfedernspanner nach Anspruch 12, dadurch gekennzeichnet, daß das dem ersten Klammernhalter (4; 104; 104/2 ) abgewandte Ende der Gewindemutter (63) mittels eines zylindrischen Ansatzes (76) in einer Lagerbohrung (77) einer stirnseitig am zweiten Klammernhalter (4/1; 104/1) befestigten Lagerplatte (78) gelagert ist.

14. Druckfedernspanner nach einem der Ansprüche 1 bis 13, dadurch gekennzeichnet, daß die beiden Greiferklammern (6; 6/1) lösbar an den beiden Klammernhaltern (4; 4/1, 104; 104/1) befestigt sind, wobei sowohl an den Greiferklammern (6; 6/1) als auch an den Klammernhaltern (4; 4/1, 104; 104/1; 104/2) jeweils im wesentlichen parallel zu den Führungsrohren (1; 2; 3) oder -stäben verlaufende Führungsflächen (22; 23; 31; 32) und quer zu den Führungsrohren (1; 2; 3) oder -stäben verlaufende Klemmkanten (41; 42; 46; 47; 48) vorgesehen sind, die unter dem Einfluß der beim Spannen einer Druckfeder auftretenden Kippmomente eine Klemmwirkung aufeinander ausüben.

15. Druckfederenspanner nach Anspruch 14, dadurch gekennzeichnet, daß die Führungsflächen (22; 23; 31; 32) von den seitlichen Begrenzungsflächen achsparalleler Führungsnuten (19; 20; 29; 30) bzw. achsparalleler, in die Führungsnuten passender Führungsleisten (24; 25; 27; 28) gebildet sind, deren obere und/oder untere Begrenzungskanten die Klemmkanten (41; 42; 46; 47; 48) bilden.

16. Druckfederenspanner nach Anspruch 14 oder 15, dadurch gekennzeichnet, daß die mit den Führungsnuten und Führungsleisten versehenen Halteblöcke (18; 18/1) bzw. Aufnahmeblöcke (26; 26/1) der Greiferklammern (6; 6/1) und der Klammernhalter (4; 4/1; 104; 104/1; 104/2) jeweils mit Querbohrungen (33, 33') zur Aufnahme eines bolzen- oder schaftartigen Verbindungsorgans (34; 35) versehen sind.

17. Druckfederenspanner nach einem der Ansprüche 1 bis 16, dadurch gekennzeichnet, daß die erste Greiferklammer (6) an dem der zweiten Greiferklammer (6/1) abgewandten Ende des Halteblocks (18, 18/1) angeordnet ist, während die zweite Greiferklammer (6/1) an dem der ersten Greiferklammer zugewandten Ende des Halteblockes (18, 18/1) angeordnet ist.

18. Druckfederenspanner nach Anspruch 3 oder einem der Ansprüche 4 bis 17, dadurch gekennzeichnet, daß der erste Klammernhalter (104/2) außerhalb der ersten Lagerbrücke (50) angeordnet und an den Enden von Verlängerungsstäben (102; 103) oder -rohren befestigt ist, die jeweils teleskopartig und axial verschiebbar in einem der Führungsrohre (2/1; 3/1) geführt sind und durch eine Hilfsgewindespindel (12/2), die in ein Innengewinde (112) einer rohrartig ausgebildeten Hauptgewindespindel (12/1 eingeschraubt ist, relativ zu den Führungsrohren (2/1, 3/1) und der Hauptgewindespindel (12/1) axial verstellbar ist.

19. Druckfederenspanner nach Anspruch 18, dadurch gekennzeichnet, daß die Hilfsgewindespindel (12/2) mittels eines Axialdrucklagers (114, 116, 118) drehbar und axial unverschiebbar im ersten Klammernhalter (104/2) gelagert ist.

20. Druckfederenspanner nach Anspruch 18 oder 19, dadurch gekennzeichnet, daß die Hilfsgewindespindel (12/2) eine Bohrung (113) des mit ihr verbundenen ersten Klammerhalters (104/2) drehbar durchragt und zwischen ihrem Gewindeschaft und ihrem Schlüsselprofil (107) einen Ringflansch (114) aufweist, der sich vermittels eines Lagerkugelnkranzes (116) auf einer Ringschulter (118) des Klammernhalters (104/2) abstützt.

21. Druckfederenspanner nach einem der Ansprüche 18 bis 20, dadurch gekennzeichnet, daß die Länge, um welche die Hilfsgewindespindel (12/2) aus der Hauptgewindespindel (12/1) herausdrehbar ist, durch einen Hubbegrenzer (95, 100) auf ein Maß begrenzt ist, welches um etwa die axiale Dicke des ersten Klammernhalters (204) kleiner ist als die Länge, mit der die Verlängerungsstäbe (102, 103) oder -rohre maximal in die Führungsrohre (2/1, 3/1) und die Hilfsgewindespindel (12/2) maximal in die Hauptgewindespindel (12/1) eindringen können.

22. Druckfederenspanner nach Anspruch 21, dadurch gekennzeichnet, daß der Hubbegrenzer aus einem mit einem Anschlagelement (100) versehenen Stab (95) besteht, der in achsparalleler Lage zur Hilfsgewindespindel (12/2) in dem an den Verlängerungsstäben (102, 103) oder -rohren befestigten ersten Klammernhalter (104/2) befestigt ist und eine Bohrung (99) der benachbarten ersten Lagerbrücke (50) durchragt.

## Claims

1. A compression spring clamp, particularly for axle springs of motor vehicles and consisting of two coaxially disposed clamp holders (4, 4/1) connected to each other by at least one cylindrical guide element (1, 2, 3) and on which there are fixed in a mutually coincident disposition, substantially stirrup-shaped clamps (6, 6/1), the first clamp holder being disposed at one end of the guide element while the second clamp holder is guided for axial movement on the guide element by means of a guide bore which is open at both ends, and comprises an axially immovably mounted threaded nut (61) which meshes with, disposed in an axially parallel location in relation to the guide element, in the common central plane of the two gripper clamps, a threaded spindle (12) by which the second clamp holder can be axially driven on the guide element and in relation to the first clamp holder, characterised in that to guide the second clamp holder (4/1; 104/1), at least two guide tubes (1, 2, 3) or rods extend parallel with each other on both sides of the threaded spindle (12) and symmetrically in relation to the common central plane in which the threaded spindle is disposed, in the first clamp holder (4; 104, 104/2) or in a first common bearing bridge (50), being connected to each other at their opposite ends by a second bearing bridge (50/1, 50/2), the guide tubes (1, 2, 3) or rods in each case passing in guiding fashion through a guide bore (91, 92, 93) in the second clamp holder (4/1; 104/1).

2. A compression spring clamp according to Claim 1, characterised in that in respect of the common axial plane (7) through the two guide tubes (2, 3) or rods disposed symmetrically in relation to the threaded spindle (12), the threaded spindle (12) is offset towards the side of the gripper clamp (6, 6/1).

3. A compression spring clamp according to Claim 1 or 2, characterised in that the threaded spindle (12) is nonrotatable in the first clamp holder (4; 104) or in the first bearing bridge (50) and in that the threaded nut (61) is rotatably but axially immovably mounted in the second clamp holder (4/1; 104/1) and is provided with, concentric in relation to its axis of rotation (12'), a gear ring (62) which meshes with a gearboxes in the form of a bevel gear or helical gearwheel or a worm (63) which is rotatably mounted in a bearing bore (64) in the second clamp holder (4/1; 104/1) which extends substantially transversely to the threaded spindle (12) and which is provided with a shank (68) which has a key profile (69).

4. A compression spring clamp according to Claim 1, 2 or 3, characterised in that the gear ring (62) of the threaded nut (61) has at least four times more teeth than the bevel or helical gearwheel or worm (63).

5. A compression spring clamp according to Claim 3 or 4, characterised in that the axis (65) of the bearing bore (64) or worm (63) extends at an acute angle obliquely to the plane (7) connecting the two axes (2', 3') of the guide tube (2, 3).

6. A compression spring clamp according to one of Claims 1 to 5, characterised in that on the side of the plane (7) extending through the axes (2', 3') of the two guide tubes (2, 3) which is opposite the gripper clamps (6, 6/1), there is in the middle plane (5) of the two gripper clamps (6, 6/1) a third guide element in the form of a guide tube (1) or rod which is fixed at one end in the first clamp holder (4; 104) or in the first bearing bridge (50) while at the other end it is connected by the second bearing bridge (50/1) to the other two guide tubes (2, 3).

7. A compression spring clamp according to one of Claims 3 to 5, characterised in that the bearing bore (64) of the worm (63) is disposed between the threaded spindle (12) and a third guide bore (91) for the third guide element (1).

8. A compression spring clamp according to one of Claims 3 to 7, characterised in that the axis (69) of the bearing bore (64) or the axis of the worm (63) mounted in the bearing bore (64) is so inclined to the axis (12') of the threaded spindle (12) that the end of the shank (68) which has the key profile (65) is at a different distance from the top or bottom (80) of the clamp holder (4/1; 104/1) than the worm (63) itself.

9. A compression spring clamp according to one of Claims 1 to 8, characterised in that the guide tubes (1, 2, 3) or rods and/or the threaded spindle (12) are in each case guided in cylindrical fitting bores (10, 10/1, 15, 15/1) in the first clamp holder (4; 104) or the first bearing bridge (50).

10. A compression spring clamp according to Claim 8, characterised in that the end portions (11, 16) of the guide tubes (1, 2, 3) or rods or the threaded spindle (12, 12/1) which are guided in the fitting bores (10, 10/1, 15, 15/1) in the first clamp holder (4; 104) or the first bearing bridge (50) are in each case screwed by a smaller diameter threaded projection (8, 8/1; 13, 13/1) in threaded bores (9, 9/1; 14, 14/1) which are adjacent the fitting bores (10, 10/1; 15, 15/1).

11. A compression spring clamp according to Claim 9 or 10, characterised in that the second bearing bridge (50/1, 50/2) is provided with a bearing bore (55) to accommodate a bearing journal (56, 56') on the threaded spindle (12, 12/1).

12. A compression spring clamp according to Claim 1, 2 or 3, characterised in that the threaded nut (61) comprises, guided in a radial bearing (74) in the second clamp holder (4/1; 104/1), a cylindrical sleeve (72) and a radial shoulder (82) directed towards the first clamp holder (4; 104, 104/2), the shoulder (82) being braced on a ring of bearing balls (81) which bear on a radial annular shoulder (83) disposed in a receiving bore (84) in the second clamp holder (4/1; 104/1).

13. A compression spring clamp according to Claim 12, characterised in that the end of the threaded nut (63) which is remote from the first clamp holder (4; 104, 104/2) is, by means of a cylindrical projection (76), mounted in a bearing bore (77) in a bearing plate (78) which is fixed on the end of the second clamp holder (4/1; 104/1).

14. A compression spring clamp according to one of Claims 1 to 13, characterised in that the two gripper clamps (6, 6/1) are separably fixed to the two clamp holders (4, 4/1; 104, 104/1), there being both on the gripper clamps (6, 6/1) and also on the clamp holders (4, 4/1; 104, 104/1, 104/2), in each case substantially parallel with the guide tubes (1, 2, 3) or rods, guide surfaces (22, 23, 31, 32) and, extending transversely to the guide tubes (1, 2, 3) or rods, clamping edges (41, 42, 46, 47, 48) which exert a clamping effect on one another under the influence of the tilting moments which occur when a compression spring is clamped or tensioned.

15. A compression spring clamp according to Claim 14, characterised in that the guide surfaces (22, 23, 31, 32) are constituted by the lateral boundary surfaces of axially parallel guide grooves (19, 20, 29, 30) or axially parallel guide strips (24, 25, 27, 28) which fit into the guide grooves and the upper and/or lower limiting edges of which form the clamping edges (41, 42, 46, 47, 48).

16. A compression spring clamp according to Claim 14 or 15, characterised in that the retaining blocks (18, 18/1) or receiving blocks 26, 26/1) of the gripper clamps (6, 6/1) and of the clamp holders (4, 4/1; 104, 104/1, 104/2) which are provided with the guide grooves and guide strips are in each case provided with transverse bores (33, 33') to accommodate a bolt or shank-like connecting member (34, 35).

17. A compression spring clamp according to one of Claims 1 to 16, characterised in that the first gripper clamp (6) is disposed on that end of the retaining block (18, 18/1) which is remote from the second gripper clamp (6/1), while the second gripper clamp (6/1) is disposed on that end of the retaining block (18, 18/1) which is towards the first gripper clamp.

18. A compression spring clamp according to Claim 3 or one of Claims 4 to 17, characterised in that the first clamp holder (104/2) is disposed outside the first bearing bridge (50) and is fixed at the ends of extension rods (102, 103) or tubes which are in each case guided for telescopic and axial movement in one of the guide tubes (2/1, 3/1), being axially adjustable in relation to the guide tubes (2/1, 3/1) and the main threaded spindle (12/1) by means of an auxiliary threaded spindle (12/2) which is screwed into an internal screwthread (112) in a tube-like main threaded spindle (12/1).

19. A compression spring clamp according to Claim 18, characterised in that the auxiliary threaded spindle (12/2) is, by means of an axial thrust bearing (114, 116, 118) mounted to be rotatable and axially non-displaceable in the first clamp holder (104/2).

20. A compression clamp according to Claim 18 or 19, characterised in that the auxiliary threaded spindle (12/2) passes rotatably through a bore (113) in the first clamp holder (104/2) which is connected to it and has between its threaded shank and its key profile (107) an annular flange (114) comprising a bearing ball ring (116) by which it bears on an annular shoulder (118) of the clamp holder (104/2).

21. A compression spring clamp according to one of Claims 18 to 20, characterised in that the length by which the auxiliary threaded spindle (12/2) can be screwed out of the main threaded spindle (12/1) is limited by a travel limiter (95, 100) to an amount which is smaller by about the axial thickness of the first clamp holder (204) than the length by which the extension rods (102, 103) or tubes can at most penetrate into the guide tubes (2/1, 3/1) and the auxiliary threaded spindle (12/2) can at most penetrate the main threaded spindle (12/1).

22. A compression spring clamp according to Claim 21, characterised in that the travel limiter consists of a rod (95) provided with an abutment element (100) and which is fixed in an axially parallel position in relation to the auxiliary threaded spindle (12/2) in the first clamp holder (104/2) which is fixed on the extension rods (102, 103) or tubes and passes through a bore (99) in the adjacent first bearing bridge (50).

**Revendications**

1. Tendeur pour ressorts de compression, en particulier pour des ressorts d'essieux de véhicules automobiles, comprenant deux supports de pince coaxiaux (4, 4/1) reliés entre eux par au moins un élément de guidage cylindrique (1, 2, 3) et sur lesquels sont fixées, dans une disposition de coïncidence, des pinces à griffes (6, 6/1) sensiblement en forme de fer à cheval, le premier support de pince étant monté à l'une des extrémités de l'élément de guidage et le second support de pince étant guidé, au moyen d'un alésage de guidage ouvert des deux côtés, avec ajustement fin coulissant, de façon à pouvoir se déplacer axialement sur l'élément de guidage et présentant un écrou (61) monté de manière axialement immobile lequel coopère avec une broche filetée (12) disposée dans une position paraxiale par rapport à l'élément de guidage, dans un plan médian commun aux deux pinces à griffes, par laquelle le second support de pince peut être entraîné axialement par rapport au premier support de pince, caractérisé en ce que, pour le guidage du second support de pince (4/1; 104/1), au moins deux tubes ou barres de guidage (1; 2; 3) parallèles sont fixés, de part et d'autre de la broche filetée (12), symétriquement au plan médian commun dans lequel est disposée ladite broche filetée, dans le premier support de pince (4; 104; 104/2) ou dans un premier pont d'appui commun (50) et reliés entre eux, à leurs extrémités opposées, par un second pont d'appui (50/1; 50/2), les tubes ou barres de guidage (1; 2; 3) traversant respectivement un alésage de guidage (91; 92; 93) du second support de pince (4/1; 104/1) de façon à assurer le guidage.

2. Tendeur pour ressorts de compression selon la revendication 1, caractérisé en ce que, par rapport au plan axial commun (7) des deux tubes ou barres de guidage (2; 3) disposés symétriquement par rapport à la broche filetée (12), la broche filetée (12) est déportée en direction de la pince à griffes (6; 6/1).

3. Tendeur pour ressorts de compression selon l'une des revendications 1 ou 2, caractérisé en ce que la broche filetée (12) est fixée de manière rigide en rotation dans le premier support de pince (4; 104) ou dans le premier pont d'appui (50) et que l'écrou (61) est monté de manière tournante mais immobile dans le sens axial dans le second support de pince (4/1; 104/1) et muni, concentriquement à son axe de rotation (12'), d'une couronne dentée (62) qui est en prise avec une roue dentée sous la forme d'une roue conique ou hélicoïdale ou d'une vis sans fin (63) laquelle est montée de manière tournante dans un alésage de palier (64) du second support de pince (4/1; 104/1) qui s'étend sensiblement transversalement à la broche filetée (12), et munie d'une tige (68) présentant un profil de clé (69).

4. Tendeur pour ressorts de compression selon l'une des revendications 1, 2 ou 3, caractérisé en ce que la couronne dentée (62) de l'écrou (61) présente un nombre de dents qui est au moins quatre fois plus grand que celui de la roue conique ou hélicoïdale et respectivement de la vis sans fin (63).

5. Tendeur pour ressorts de compression selon l'une des revendications 3 ou 4, caractérisé en ce que l'axe (65) de l'alésage de palier (64) et respectivement de la vis sans fin (63) est incliné de façon à former un angle aigu avec le plan (7) qui relie les deux axes (2'; 3') des tubes de guidage (2; 3).

6. Tendeur pour ressorts de compression selon l'une des revendications 1 à 5, caractérisé en ce que, du côté du plan (7) opposé aux pinces à griffes (6;

6/1) et passant par les axes (2'; 3') des deux tubes de guidage (2; 3), un troisième élément de guidage sous la forme d'un tube ou d'une barre de guidage (1) est disposé dans le plan médian (5) des deux pinces à griffes (6; 6/1), ledit élément de guidage étant fixé, à l'une des extrémités, à ajustement serré dans le premier support de pince (4; 104) ou dans le premier pont d'appui (50) et relié, à l'autre extrémité, aux deux autres tubes de guidage (2; 3) par l'intermédiaire du second pont d'appui (50/1).

7. Tendeur pour ressorts de compression selon l'une des revendications 3 à 5, caractérisé en ce que l'alésage de palier (64) de la vis sans fin (63) est disposé entre la broche filetée (12) et un troisième alésage de guidage (91) pour le troisième élément de guidage (1).

8. Tendeur pour ressorts de compression selon l'une des revendications 3 à 7, caractérisé en ce que l'axe (69) de l'alésage de palier (64) et respectivement l'axe de la vis sans fin (63) montée dans l'alésage de palier (64) est incliné par rapport à l'axe (12') de la broche filetée (12) de telle façon que l'extrémité de la tige (68) munie du profil de clé (65) présente par rapport à la face supérieure ou inférieure (80) du support de pince (4/1; 104/1) une autre distance que la vis sans fin (63) elle-même.

9. Tendeur pour ressorts de compression selon l'une des revendications 1 à 8, caractérisé en ce que les tubes ou barres de guidage (1; 2; 3) et/ou la broche filetée (12) sont respectivement guidés dans des trous cylindriques calibrés (10, 10/1, 15, 15/1) du premier support de pince (4; 104) et respectivement du premier pont d'appui (50).

10. Tendeur pour ressorts de compression selon la revendication 8, caractérisé en ce que les sections terminales (11; 16) des tubes ou barres de guidage (1; 2; 3) et respectivement de la broche filetée (12; 12/1) guidées dans les trous calibrés (10; 10/1; 15; 15/1) du premier support de pince (4; 104) et respectivement du premier pont d'appui (50) sont vissées avec des embouts filetés (8; 8/1; 13; 13/1) d'un diamètre réduit dans des trous taraudés (9; 9/1; 14; 14/1) qui font suite aux trous calibrés (10; 10/1; 15; 15/1).

11. Tendeur pour ressorts de compression selon l'une des revendications 9 ou 10, caractérisé en ce que le second pont d'appui (50/1; 50/2) est muni d'un alésage de palier (55) pour le logement d'un tourillon (56; 56') de la broche filetée (12, 12/1).

12. Tendeur pour ressorts de compression selon l'une des revendications 1, 2 ou 3, caractérisé en ce que l'écrou (61) comprend un corps de douille (72) cylindrique guidé dans un palier radial (74) du second support de pince (4/1; 104/1), et un épaulement d'appui radial (82) dirigé vers le premier support de pince (4; 104; 104/2), l'épaulement d'appui (82) prenant appui sur une couronne de billes de roulement (81) lesquelles reposent sur un épaulement annulaire radial (83) situé dans un alésage de réception (84) du second support de pince (4/1; 104/1).

13. Tendeur pour ressorts de compression selon la revendication 12, caractérisé en ce que l'extrémité de l'écrou (61) opposée au premier support de pince (4; 104; 104/2) est montée, au moyen d'un embout cylindrique (76), dans un alésage de palier (77) d'une plaque d'appui (78) fixée sur le second support de pince (4/1; 104/1).

14. Tendeur pour ressorts de compression selon l'une des revendications 1 à 13, caractérisé en ce que les deux pinces à griffes (6; 6/1) sont fixées de manière amovible sur les deux supports de pince (4; 4/1; 104; 104/1), sur les pinces à griffes (6; 6/1) aussi bien que sur les supports de pince (4; 4/1; 104; 104/1; 104/2) étant respectivement prévus des surfaces de guidage (22; 23; 31; 32) s'étendant sensiblement parallèlement aux tubes ou barres de guidage (1; 2; 3) et des bords de serrage (41; 42; 46; 47; 48) orientés transversalement au tubes de guidage (1; 2; 3), qui, sous l'influence des couples de renversement intervenant lors de la tension d'un ressort de compression, exercent les uns sur les autres une action de serrage.

15. Tendeur pour ressorts de compression selon la revendication 14, caractérisé en ce que les surfaces de guidage (22; 23; 31; 32) sont constituées par les surfaces périphériques latérales de rainures de guidage paraxiales (19; 20; 29; 30) et respectivement de rebords de guidage paraxiaux (24; 25; 27; 28) adaptés auxdites rainures de guidage, dont les bords périphériques supérieures et/ou inférieures forment les bords de serrage (41; 42; 46; 47; 48).

16. Tendeur pour ressorts de compression selon l'une des revendications 14 ou 15, caractérisé en ce que les blocs de fixation (18; 18/1) et respectivement les blocs de réception (26; 26/1) des pinces à griffes (6; 6/1) et des supports de pince (4; 4/1; 104; 104/1; 104/2) munis des rainures et rebords de guidage présentant respectivement des alésages transversaux (33, 33') pour la réception d'un organe de raccordement (34; 35) en forme de boulon ou de tige.

17. Tendeur pour ressorts de compression selon l'une des revendications 1 à 16, caractérisé en ce que la première pince à griffes (6) est disposée à l'extrémité du bloc de fixation (18, 18/1) opposée à la seconde pince à griffes (6/1), alors que la seconde pince à griffes (6/1) est disposée à l'extrémité du bloc de fixation (18, 18/1) dirigée vers la première pince à griffes.

18. Tendeur pour ressorts de compression selon la revendication 3 ou l'une des revendications 4 à 17, caractérisé en ce que le premier support de pince (104/2) est disposé en dehors du premier pont d'appui (50) et fixé aux extrémités de barres ou de tubes de rallonge (102; 103) qui sont respectivement guidés de manière télescopique et mobile dans le sens axial dans l'un des tubes de guidage (2/1; 3/1) et qui peuvent être déplacés axialement, par une broche filetée auxiliaire (12/2) vissée dans un filet intérieur (112) d'une broche filetée principale (12/1) de forme tubulaire, par rapport aux tubes de guidage (2/1, 3/1) et à la broche filetée principale (12/1).

19. Tendeur pour ressorts de compression selon la revendication 18, caractérisé en ce que, au moyen d'un palier de butée (114, 116, 118), la broche filetée auxiliaire (12/2) est montée de manière tournante et immobile dans le sens axial dans le premier support de pince (104/2).

20. Tendeur pour ressorts de compression selon l'une des revendications 18 ou 19, caractérisé en ce que la broche filetée auxiliaire (12/2) traverse de manière tournante un alésage (113) du premier support de pince (104/2) raccordé à ladite broche filetée et présente, entre sa tige filetée et son profil de clé (107), une bride annulaire (114) qui s'appuie au moyen d'une couronne de billes de roulement (116) sur un épaulement annulaire (118) du support de pince (104/2).

21. Tendeur pour ressorts de compression selon l'une des revendications 18 à 20, caractérisé en ce que la longueur sur laquelle la broche filetée auxiliaire (12/2) peut être dévissée de la broche filetée principale (12/1) est limitée par un limiteur de course (95, 100) à une valeur inférieure d'environ l'épaisseur axiale du premier support de pince (204) à la longueur de pénétration maximale des barres ou tubes de rallonge (102, 103) dans les tubes de guidage (2/1, 3/1) et de la broche filetée auxiliaire (12/2) dans la broche filetée principale (12/1).

22. Tendeur pour ressorts de compression selon la revendication 21, caractérisé en ce que le limiteur de course est constitué par une barre (95) munie d'un élément de butée (100) qui est fixée, dans une position paraxiale par rapport à la broche filetée auxiliaire (12/2), dans le premier support de pince (104/2) monté sur les barres ou tubes de rallonge (102, 103) et traverse un alésage (99) du premier pont d'appui voisin (50).

FIG. 1

FIG. 2

FIG. 3

**FIG. 4**

**FIG. 5**

**FIG. 9**

FIG.6

FIG.7

FIG. 8

FIG. 10

EP 0 250 638 B1

23

FIG. 11